# EUROPEAN PATENT SPECIFICATION

(11) **EP 2 874 380 B1**
(45) Date of publication and mention of the grant of the patent: **13.03.2019**
(21) Application number: 13797997.7
(22) Date of filing: 09.06.2013
(51) Int. Cl.: H04M 1/2745, H04L 29/12, H04M 1/725, H04W 4/02

(54) **ADDRESS BOOK SORTING METHOD AND SYSTEM OF MOBILE TERMINAL**
ADRESSBUCHSORTIERVERFAHREN UND -SYSTEM FÜR EIN MOBILES ENDGERÄT
PROCÉDÉ ET SYSTÈME POUR OPÉRER UN TRI DANS LE CARNET D'ADRESSES D'UN TERMINAL MOBILE

(30) Priority: 17.08.2012 CN 201210293431
(43) Date of publication of application: 20.05.2015
(73) Proprietor: ZTE Corporation, Shenzhen, Guangdong 518057 (CN)
(72) Inventor: HUANG, Qinbo, Shenzhen, Guangdong 518057 (CN); ZHANG, Benquan, Shenzhen, Guangdong 518057 (CN); ZHONG, Sheng, Shenzhen, Guangdong 518057 (CN)
(74) Representative: Cabinet Laurent & Charras
(86) International application number: PCT/CN2013/077083
(87) International publication number: WO 2013/178101

(56) References cited:
- CN-A- 1 491 060
- CN-A- 101 754 367
- CN-A- 101 867 638
- US-A1- 2004 023 668
- US-A1- 2006 115 065
- US-A1- 2008 176 585
- US-A1- 2009 197 621

## Description

### Technical Field

The present invention relates to the field of mobile communications, and in particular, to a method and system for ranking an address book of a mobile terminal.

### Background of the Related Art

The address book is one of basic applications of a mobile terminal such as a mobile phone etc., and is used for storing information such as telephone numbers of contact persons etc. At present, an order of ranking contact persons in the address book is generally an order of initial letters of names of the contact persons in the alphabet.

This ranking manner is inconvenient in daily life. For example, if a user of a mobile terminal is on a business trip, after the user arrives at the destination, the user searches the address book for telephone numbers of local contact persons. According to the current ranking manner in the address book, the user may need to spend some time to find the telephone numbers of the required contact persons, and if there is more than one required contact person, the user will spend a lot of time on searching for the telephone numbers.

Then, for the case described above, there is a problem of how to bring more convenience to the user of the mobile terminal by ranking the information of contact persons in the address book.

US 2004/0023668 A1 provides a data terminal having a telephone function. A CPU in a cellular phone counts the number of calling times in each area in which the cellular phone resides, and stores the number of calling times for each area. The telephone numbers stored in the telephone directory file are affixed by priority orders based on the number of calling times for the area to which the telephone codes of the telephone numbers correspond. When the user wishes to display the telephone numbers on the screen of a display unit, the CPU arranges the telephone numbers in the order of the priority orders on the screen.

US 2008/0176585 A1 provides a method of displaying contact information on a mobile device. The method includes storing a plurality of contact records on a mobile device. At least one record contains information corresponding to the geographic location of at least one of the contacts. The geographic location of the mobile device is determined and compared with the geographic location of the contacts stored on the mobile device. The contacts are arranged based on the geographic proximity of the contact to the mobile device.

### Summary of the Invention

The embodiments of the present invention provide a method and system for ranking an address book of a mobile terminal, to solve the technical problem of how to enable the user of the mobile terminal to more conveniently acquire a means of communication of a contact person in a place where the user arrives.

The features of method and system according to the present invention are defined in the independent claims, and the preferable features according to the present invention are defined in the dependent claims. The embodiments and/or examples disclosed in the following description which are not covered by the appended claims are considered as not being part of the present invention.

With the above technical scheme, a contact person who is in the same place as the terminal is selected from the address book, and the information of the selected contact person is placed at the top of the address book, thereby facilitating the terminal user to more conveniently acquire a means of communication of a contact person in a place where the user arrives.

### Brief Description of Drawings

Fig. 1 is a flowchart of a method for ranking an address book of a mobile terminal according to the present embodiment; and
Fig. 2 is a diagram of constitution of a system for ranking an address book of a mobile terminal according to the present embodiment.

### Preferred Embodiments of the Present Invention

The embodiments of the present invention will be described in detail below in conjunction with accompanying drawings. It should be illustrated that without a conflict, the embodiments in the present application and the features in the embodiments can be combined with each other randomly.

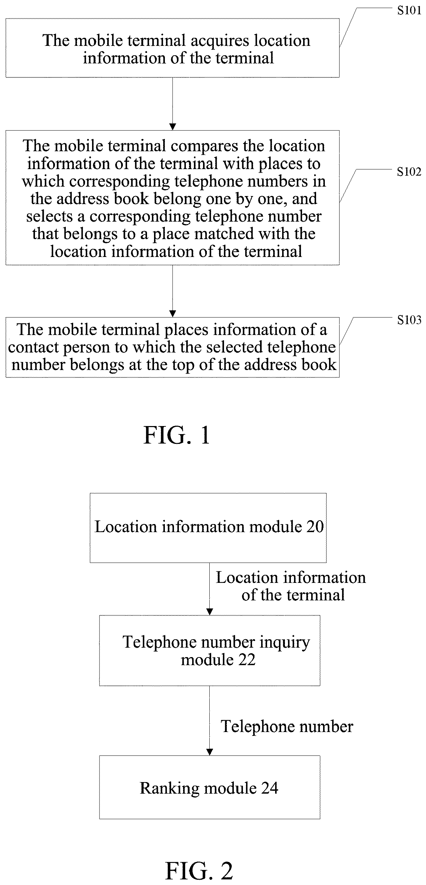

Fig. 1 is a flowchart of a method for ranking an address book of a mobile terminal according to the present embodiment. As shown in Fig. 1, the method comprises the following steps.

In step S101, the mobile terminal acquires location information of the terminal.

The mobile terminal may acquire the location information of the terminal through a Global Positioning System (GPS).

When the user wants to customize information of a contact person needed to be placed at the top in the address book according to the actual requirements of his/her own, the user may preset location information; after acquiring the location information of the terminal through the GPS, the mobile terminal checks whether the location information of the terminal is included in the location information preset by the user, and when the location information of the terminal is included in the location information preset by the user, step S102 continues to be performed.

In step S102, the mobile terminal compares the location information of the terminal with places to which corresponding telephone numbers in the address book belong one by one, and selects a corresponding telephone number that belongs to a place matched with the location information of the terminal.

In step S103, the mobile terminal places information of a contact person to which the selected telephone number belongs at the top of the address book.

After selecting the telephone number, the mobile terminal may transmit a top placing inquiry message to the user; and after receiving a top placing acknowledgement message from the user, the mobile terminal may place the information of the contact person to which the selected telephone number belongs at the top of the address book.

The above method of acquiring the location information of the terminal, selecting the telephone number using the location information of the terminal, and placing the selected telephone number at the top may also be applied to ranking the call records and short message records including telephone numbers.

The above embodiment will be described below by taking two application examples.

### Application example one

A terminal departs from "Chengdu in SiChuan" to arrive at "Mianyang in Sichuan" via "Deyang in Sichuan". The process includes the following steps.

In step one, the mobile terminal starts a GPS.

In step two, the mobile terminal acquires location information of "Chengdu in Sichuan" through the GPS.

In step three, the mobile terminal compares the location information of "Chengdu in Sichuan" with places to which corresponding telephone numbers in an address book belong one by one, and selects a telephone number that belongs to the place of "Chengdu in Sichuan".

In step four, the mobile terminal places the information of a contact person to which the telephone number belonging to the place of "Chengdu in Sichuan" belongs at the top of the address book.

In step five, the mobile terminal moves from "Chengdu in Sichuan" to "Deyang in Sichuan", and acquires location information of "Deyang in Sichuan" through the GPS.

In step six, the mobile terminal compares the location information of "Deyang in Sichuan" with places to which corresponding telephone numbers in an address book belong one by one, and selects a telephone number that belongs to the place of "Deyang in Sichuan".

In step seven, the mobile terminal places the information of a contact person to which the telephone number belonging to the place of "Deyang in Sichuan" belongs at the top of the address book.

In step eight, the mobile terminal moves from "Deyang in Sichuan" to "Mianyang in Sichuan", and acquires location information of "Mianyang in Sichuan" through the GPS.

In step nine, the mobile terminal compares the location information of "Mianyang in Sichuan" with places to which corresponding telephone numbers in an address book belong one by one, and selects a telephone number which belongs to the place of "Mianyang in Sichuan".

In step ten, the mobile terminal places the information of a contact person to which the telephone number belonging to the place of "Mianyang in Sichuan" belongs at the top of the address book.

### Application example two

A terminal departs from "Chengdu in SiChuan" to arrive at "Mianyang in Sichuan" via "Deyang in Sichuan". However, the user only desires to acquire the information of the local contact person at the start place and at the destination. The process includes the following steps.

In step one, the mobile terminal starts a GPS, and at the same time, sets the city of a contact person which is required to be placed at the top as "Chengdu in Sichuan" and "Mianyang in Sichuan".

In step two, the mobile terminal acquires location information of "Chengdu in Sichuan" through the GPS.

In step three, the mobile terminal compares the location information of "Chengdu in Sichuan" with the information set in step one, and finds that the location information of "Chengdu in Sichuan" is included in the information set in step one, and the mobile terminal compares the location information of "Chengdu in Sichuan" with places to which corresponding telephone numbers in an address book belong one by one, and selects a telephone number that belongs to the place of "Chengdu in Sichuan".

In step four, the mobile terminal places the information of a contact person to which the telephone number belonging to the place of "Chengdu in Sichuan" belongs at the top of the address book.

In step five, the mobile terminal moves from "Chengdu in Sichuan" to "Deyang in Sichuan", and acquires location information of "Deyang in Sichuan" through the GPS.

In step six, the mobile terminal compares the location information of "Deyang in Sichuan" with the information set in step one, and finds that the location information of "Deyang in Sichuan" is not included in the information set in step one, and the mobile terminal will not select the telephone number that belongs to the place of "Deyang in Sichuan" from the address book.

In step seven, the mobile terminal moves from "Deyang in Sichuan" to "Mianyang in Sichuan", and acquires location information of "Mianyang in Sichuan" through the GPS.

In step eight, the mobile terminal compares the location information of "Mianyang in Sichuan" with the information set in step one, and finds that the location information of "Mianyang in Sichuan" is included in the information set in step one, and the mobile terminal compares the location information of "Mianyang in Sichuan" with places to which corresponding telephone numbers in an address book belong one by one, and selects a telephone number that belongs to the place of "Mianyang in Sichuan".

In step nine, the mobile terminal places the information of a contact person to which the telephone number belonging to the place of "Mianyang in Sichuan" belongs at the top of the address book.

Fig. 2 is a diagram of constitution of a system for ranking an address book of a mobile terminal according to the present embodiment.

The system includes a location information module 20, a telephone number inquiry module 22, and a ranking module 24, wherein,
the location information module 20 is configured to acquire location information of the terminal, and transmit the acquired location information of the terminal to the telephone number inquiry module 22;
the location information module 20 is configured to acquire the location information of the terminal by: acquiring the location information of the terminal through a Global Positioning System (GPS);
the location information module 20 is further configured to check whether the location information of the terminal is included in location information preset by the user after acquiring the location information of the terminal through the GPS, and when the location information of the terminal is included in the location information preset by the user, transmit the location information of the terminal to the telephone number inquiry module 22;
the telephone number inquiry module 22 is configured to compare the location information of the terminal transmitted by the location information module with places to which corresponding telephone numbers in the address book belong one by one, select a corresponding telephone number that belongs to a place matched with the location information of the terminal, and transmit the selected telephone number to the ranking module;
the ranking module 24 is configured to place information of a contact person to which the selected telephone number belongs at the top of the address book;
the ranking module 24 is configured to place information of a contact person to which the selected telephone number belongs at the top of the address book by: after receiving the selected telephone number, transmitting a top placing inquiry message to the user; and after receiving a top placing acknowledgement message from the user, placing the information of the contact person to which the selected telephone number belongs at the top of the address book.

A person having ordinary skill in the art should understand that all or a part of the steps in the above method can be implemented by programs instructing related hardware, and the programs can be stored in a computer readable storage medium, such as a read-only memory, a disk, or a disc etc. Alternatively, all or a part of the steps in the aforementioned embodiments can also be implemented with one or more integrated circuits. Accordingly, various modules/units in the aforementioned embodiments can be implemented in a form of hardware, or can also be implemented in a form of software functional modules. The embodiments of the present invention are not limited to any particular form of combination of hardware and software.

It should be illustrated that the present invention can also have a variety of other embodiments. Those skilled in the art can make various corresponding changes and variations based on the embodiments of the present invention, but all these changes and variations should belong to the protection scope of the appended claims in the present invention.

### Industrial Applicability

With the above technical scheme, a contact person who is in the same place as the terminal is selected from the address book, and the information of the selected contact person is placed at the top of the address book, thereby facilitating the terminal user to more conveniently acquire a means of communication of a contact person in a place where the user arrives.

## Claims

1. A method for ranking an address book of a mobile terminal, comprising the steps of:
the mobile terminal acquiring by a location information module location information of the mobile terminal (101);
the mobile terminal comparing by a telephone number inquiry module the location information of the mobile terminal with places to which corresponding telephone numbers in the address book belong one by one, and selecting a corresponding telephone number that belongs to a place matched with the location information of the mobile terminal (102); and
the mobile terminal placing by a ranking module information of a contact person to which the selected telephone number belongs at the top of the address book (103);
**characterized in that**,
the step of the mobile terminal placing information of a contact person to which the selected telephone number belongs at the top of the address book comprises the steps of:
after selecting the telephone number, the mobile terminal transmitting by the ranking module a top placing inquiry message to the user; and
after receiving a top placing acknowledgement message from the user, the mobile terminal placing by the ranking module the information of the contact person to which the selected telephone number belongs at the top of the address book.

2. The method according to claim 1, wherein, the step of the mobile terminal acquiring location information of the terminal comprises a step of:
the mobile terminal acquiring the location information of the mobile terminal through a Global Positioning System, GPS.

3. The method according to claim 2, further comprising the steps of:
after the step of the mobile terminal acquiring the location information of the mobile terminal through the GPS, the mobile terminal checking whether the location information of the mobile terminal is included in location information preset by the user, and when the location information of the mobile terminal is included in the location information preset by the user, comparing the location information of the mobile terminal with the places to which the corresponding telephone numbers in the address book belong one by one.

4. A system for ranking an address book of a mobile terminal, comprising a location information module (20), a telephone number inquiry module (22), and a ranking module (24), wherein,
the location information module (20) is configured to acquire location information of the mobile terminal, and transmit the acquired location information of the mobile terminal to the telephone number inquiry module;
the telephone number inquiry module (22) is configured to compare the location information of the mobile terminal transmitted by the location information module with places to which corresponding telephone numbers in the address book belong one by one, select a corresponding telephone number that belongs to a place matched with the location information of the mobile terminal,
and transmit the selected telephone number to the ranking module; and
the ranking module (24) is configured to place information of a contact person to which the selected telephone number belongs at the top of the address book;
**characterized in that**,
the ranking module (24) is configured to: receive the selected telephone number from the telephone number inquiry module, transmit a top placing inquiry message to the user, receive a top placing acknowledgement message from the user, and place the information of the contact person to which the selected telephone number belongs at the top of the address book after having received the top placing acknowledgement message.

5. The system according to claim 4, wherein, the location information module (20) is configured to acquire the location information of the mobile terminal by:
acquiring the location information of the mobile terminal through a Global Positioning System,
GPS.

6. The system according to claim 5, wherein,
the location information module (20) is further configured to, after acquiring the location information of the mobile terminal through the GPS, check whether the location information of the mobile terminal is included in location information preset by the user, and when the location information of the mobile terminal is included in the location information preset by the user, transmit the location information of the mobile terminal to the telephone number inquiry module.

## Patentansprüche

1. Ein Verfahren zum Ranking eines Adressbuchs eines mobilen Endgeräts, das die folgenden Schritte umfasst:
das mobile Endgerät erfasst über ein Ortsinformationsmodul die Ortsinformation des mobilen Endgeräts (101);
das mobile Endgerät vergleicht über ein Telefonnummernabfragemodul die Ortsinformationen des mobilen Endgeräts mit Orten, zu denen entsprechende Telefonnummern im Adressbuch gehören, und zwar nacheinander, mit Auswahl einer entsprechenden Telefonnummer, die zu einem Ort gehört, der mit der Ortsinformation des mobilen Endgeräts (102) übereinstimmt; und
das mobile Endgerät platziert über ein Rankingmodul die Information einer Kontaktperson, zu der die ausgewählte Telefonnummer gehört, an der Spitze des Adressbuchs (103);
**dadurch gekennzeichnet, dass**
der Schritt, in dem das mobile Endgerät die Information einer Kontaktperson, zu der die ausgewählte Telefonnummer gehört, an der Spitze des Adressbuchs platziert, die Schritte umfasst:
nach Auswahl der Telefonnummer, überträgt das mobile Endgerät über das Rankingmodul eines Spitzenplatzierungsanfragemeldung an den Benutzer; und
nach Erhalt einer Spitzenplatzierungsbestätigungsmeldung vom Benutzer platziert das mobile Endgerät über ein Rankingmodul die Information einer Kontaktperson, zu der die ausgewählte Telefonnummer gehört, an der Spitze des Adressbuchs.

2. Verfahren nach Anspruch 1, wobei der Schritt, in dem das mobile Endgerät die Ortsinformation des mobilen Endgeräts erfasst, den Schritt umfasst:
das mobile Endgerät erfasst die Ortsinformation des mobilen Endgeräts über das Global Positioning System, GPS.

3. Verfahren nach Anspruch 2, das weiterhin die Schritte umfasst:
nach dem Schritt, in dem das mobile Endgerät die Ortsinformation des mobilen Endgeräts über GPS erfasst, Prüfung durch das mobile Endgerät, ob die die Ortsinformation des mobilen Endgeräts in der vom Benutzer voreingestellten Ortsinformation enthalten ist und wenn die Ortsinformation des mobilen Endgeräts in der vom Benutzer voreingestellten Ortsinformation enthalten ist, Vergleich der Ortsinformation des mobilen Endgeräts mit den Orten, zu denen die entsprechenden Telefonnummern in dem Adressbuch gehören, und zwar nacheinander.

4. Ein System zum Ranking eines Adressbuchs eines mobilen Endgeräts, umfassend ein Ortsinformationsmodul (20), ein Telefonnummernabfragemodul (22) und ein Rankingmodul (24), wobei
das Ortsinformationsmodul (20) konfiguriert ist, um die Ortsinformation des mobilen Endgeräts, zu erfassen und die erfasste Ortsinformation des mobilen Endgeräts an das Telefonnummernabfragemodul zu übertragen:
das Telefonnummernabfragemodul (22) ist dazu konfiguriert, die Ortsinformationen des mobilen Endgeräts, die vom Ortsinformationsmodul übertragen werden, mit Orten zu vergleichen, zu denen entsprechende Telefonnummern im Adressbuch gehören, und zwar nacheinander, eine entsprechende Telefonnummer, die zu einem Ort gehört, der mit der Ortsinformation des mobilen Endgeräts übereinstimmt, auszuwählen, und die ausgewählte Telefonnummer an das Rankingmodul zu übertragen; und
das Rankingmodul (24) konfiguriert ist, um die Information einer Kontaktperson, zu der die ausgewählte Telefonnummer gehört, an der Spitze des Adressbuchs zu platzieren;
**dadurch gekennzeichnet, dass**
das Rankingmodul (24) dazu konfiguriert ist die ausgewählte Telefonnummer vom Telefonnummernabfragemodul zu erhalten,
eine Spitzenplatzierungsanfragemeldung an den Benutzer zu übertragen, eine Spitzenplatzierungsbestätigungsmeldung vom Benutzer zu erhalten und die Information einer Kontaktperson, zu der die ausgewählte Telefonnummer gehört, nach Erhalt der Spitzenplatzierungsbestätigungsmeldung an der Spitze des Adressbuchs zu platzieren.

5. System nach Anspruch 4, wobei das Ortsinformationsmodul (20) konfiguriert ist, um die Ortsinformation des mobilen Endgeräts zu erfassen durch:
Erfassung der Ortsinformation des mobilen Endgeräts durch ein Global Positioning System, GPS.

6. System nach Anspruch 5, wobei
das Ortsinformationsmodul (20) weiterhin konfiguriert ist, um nach Erfassung der Ortsinformation des mobilen Endgeräts über GPS zu prüfen, ob die Ortsinformation des mobilen Endgeräts in der vom Benutzer voreingestellten Ortsinformation enthalten ist und wenn die Ortsinformation des mobilen Endgeräts in der vom Benutzer voreingestellten Ortsinformation enthalten ist, die Ortsinformation des mobilen Endgeräts an das Telefonnummernabfragemodul zu übertragen.

## Revendications

1. Méthode de classement d'un carnet d'adresses d'un terminal mobile, comprenant les étapes suivantes :
le terminal mobile acquiert, via un module d'informations de localisation, des informations de localisation du terminal mobile (101) ;
le terminal mobile compare, via un module de demande de numéro de téléphone, les informations de localisation du terminal mobile avec des lieux auxquels les numéros de téléphone correspondants du carnet d'adresses appartiennent un par un, et sélectionne un numéro de téléphone correspondant qui appartient à un lieu apparié aux informations de localisation du terminal mobile (102) ; et
le terminal mobile positionne, via un module de classement, les informations d'une personne contact à laquelle le numéro de téléphone sélectionné appartient en haut du carnet d'adresses (103) ;
**caractérisée en ce que**
l'étape du terminal mobile positionnant des informations d'une personne contact à laquelle appartient le numéro de téléphone sélectionné en haut du carnet d'adresses comprend les étapes suivantes :
après la sélection du numéro de téléphone, le terminal mobile transmet, via le module de classement, un message de requête de positionnement haut à l'utilisateur ; et
après réception d'un message d'accusé de réception de positionnement haut de la part de l'utilisateur, le terminal mobile positionne dans le haut du carnet d'adresses les informations de la personne contact à laquelle appartient le numéro de téléphone sélectionné.

2. Méthode selon la revendication 1, dans lequel l'étape du terminal mobile qui acquiert les informations de localisation comprend une étape suivante :
le terminal mobile acquiert les informations de localisation du terminal mobile via un système de positionnement global, GPS.

3. Méthode selon la revendication 2, comprenant en outre les étapes suivantes :
après l'étape du terminal mobile qui acquiert des informations de localisation du terminal mobile par l'intermédiaire du GPS, le terminal mobile vérifie si les informations de localisation du terminal mobile sont incluses dans les informations de localisation prédéfinies par l'utilisateur, et lorsque les informations de localisation du terminal mobile sont incluses dans les informations de localisation prédéfinies par l'utilisateur, compare les informations de localisation du terminal mobile aux emplacements auxquels les numéros de téléphone correspondants du carnet d'adresses appartiennent un à un.

4. Système de classement d'un carnet d'adresses d'un terminal mobile, comprenant un module d'informations de localisation (20), un module de demande de numéro de téléphone (22) et un module de classement (24), dans lequel
le module d'informations de localisation (20) est configuré pour acquérir des informations de localisation du terminal mobile, et transmettre les informations de localisation du terminal mobile acquises au module de demande de numéro de téléphone ;
le module de demande de numéro de téléphone (22) est configuré pour comparer les informations de localisation du terminal mobile transmises par le module d'informations de localisation à des emplacements auxquels des numéros de téléphone correspondants du carnet d'adresses appartiennent un à un, sélectionner un numéro de téléphone correspondant qui appartient à un lieu apparié aux informations de localisation du terminal mobile, et transmettre le numéro de téléphone sélectionné au module de classement ; et
le module de classement (24) est configuré pour positionner des informations d'une personne contact à laquelle le numéro de téléphone sélectionné appartient en haut du carnet d'adresses ;
**caractérisé en ce que**
le module de classement (24) est configuré pour : recevoir le numéro de téléphone sélectionné en provenance du module de demande de numéro de téléphone, transmettre un message de demande de positionnement haut à l'utilisateur, recevoir un message d'accusé de réception de positionnement haut de la part de l'utilisateur, et positionner les informations de la personne contact à laquelle le numéro de téléphone sélectionné appartient en haut du carnet d'adresses après avoir reçu le message d'accusé de réception de positionnement haut.

5. Système selon la revendication 4, dans lequel le module d'informations de localisation (20) est configuré pour acquérir les informations de localisation du terminal mobile par :
acquisition des informations de localisation du terminal mobile via un système de positionnement global, GPS.

6. Système selon la revendication 5, dans lequel
le module d'informations de localisation (20) est en outre configuré pour, après avoir acquis les informations de localisation du terminal mobile via le GPS, vérifier si les informations de localisation du terminal mobile sont incluses dans des informations de localisation prédéfinies par l'utilisateur, et lorsque les informations de localisation du terminal mobile sont incluses dans les informations de localisation prédéfinies par l'utilisateur, transmettre les informations de localisation du mobile terminal au module de demande de numéro de téléphone.
